# EUROPEAN PATENT APPLICATION

(11) **EP 2 363 974 A1**
(43) Date of publication of application: **07.09.2011**
(21) Application number: 10154968.1
(22) Date of filing: 26.02.2010
(51) Int. Cl.: H04L 9/06

(54) **Variable table masking for cryptographic processes**

(71) Applicant: RESEARCH IN MOTION LIMITED, Waterloo, Ontario N2L 3W8 (CA)
(72) Inventor: Gebotys, Catherine Helen, Baden Ontario N3A 3A3 (CA)
(74) Representative: Rickard, David John

(57) **Abstract**

Countermeasures for differential power or electromagnetic analysis attacks are provided with the definition and use of key encryption masks and masked substitution tables in a cryptographic process. Different key encryption masks and masked substitution tables are applied to different portions of masked keys used in the cryptographic process and are rotated as the cryptographic operations are carried out. The rotation of the key encryption masks and the masked substitution tables is non-uniform. Input and output masking for the substitution tables is provided.

## Description

This invention relates generally to computing systems and, more particularly, to computing systems implementing encryption operations and countermeasures to resist power analysis attacks on such operations.

Computing systems often require operations to be carried out in a secure manner. For embedded computing devices and for pervasive systems, security of operation is often crucial. To ensure operations and communications are secure, such systems employ cryptographic methods.

The implementation of such a cryptographic method must itself be secure. However, cryptographic methods are subject to attacks. One type of non-invasive attack on computing devices implementing cryptographic methods is known as a power analysis attack. A power analysis attack involves the monitoring of the power consumption of one or more components of a device while the device executes a cryptographic method.

The data derived from monitoring power consumption of the device, combined with knowledge of the operations being carried out by the device, are used to derive the secret information that is part of the cryptographic method.

One type of power analysis attack is known as a Differential Power Analysis ("DPA") (see, for example, "Differential Power Analysis", P. Kocher, CRYPTO'99, Lecture Notes in Computer Science, 1666, pp. 388-397, 1999, Springer-Verlag). This approach involves generating a large number of inputs by varying different bits in values to be encoded using the cryptographic method implemented in a device. The DPA attack physically monitors power consumption at different points in a computing device for each of these varying values and, by statistical analysis, the differential data is used to determine a likely key value for the cryptographic method (the secret information).

DPA attacks may target the input or the output of Substitution tables (also referred to as substitution boxes or "S-boxes") that are common in cryptographic algorithms and are often implemented as look up tables. An S-box is typically indexed by a combination of key bits and plaintext. In carrying out an attack to determine a key value used in a cryptographic system, an attacker controls the plaintext values and makes guesses at the key bits. Based on these guesses, computations are performed on the acquired power traces to form a set of DPA data. The DPA data with the largest peak value is used to determine which of the key bit guesses was likely correct. As will be appreciated by those skilled in the art, another type of attack is based on electromagnetic analysis of the device carrying out a cryptographic process. Although the description below references power attacks, it will be appreciated that electromagnetic analysis attacks may raise the same issues.

There are several known countermeasures for this S-box DPA attack. Messerges ("Securing the AES Finalists Against Power Analysis Attacks", T. Messerges, FSE 2000, Lecture Notes in Computer Science, 1978, pp. 150-164, 2001, Springer-Verlag) identifies a method of frequently regenerating tables with a different random output mask within the cryptographic algorithm. However, such an approach includes a potentially large overhead cost for each regeneration step. To improve the latency overhead required to regenerate the tables, Itoh ("DPA countermeasure based on the 'masking method'", K. Itoh et al. , ICICS 2001, Lecture Notes in Computer Science, 2288, pp. 440-456, 2001, Springer-Verlag) suggests using a fixed number of fixed values to mask the substitution tables. Different substitution tables may be pre-defined and the different tables used at different times in the cryptographic system. However, in the system disclosed in Itoh, the same mask is used for all round keys during each invocation of the cryptographic process. Further, there is a potential for an attacker to obtain information by using simple power analysis to identify cryptographic processes which utilize the same mask. Hence an attacker who determines one mask and has access to masked round keys (for example, through a 1^{st} -order differential power analysis), may be able to obtain all bits of the master key and all round keys. In such approaches, when the mask is determined by an attacker, the entire master key is placed at risk.

A further approach involves the duplication method described in Patarin (US Patent 6,658,569, Patarin et al., "Secret key cryptographic process for protecting a computer system against attacks by physical analysis") that targets secret-sharing schemes where multiple inputs to the S-box are supported. The multiple inputs to the table are transformed into a variable v. Additionally two table outputs are produced: one is a random transformation on the input, A(v), and another is A(v) exclusive-or'd with S(v). However, since the random transformation on *ν* does not change in the Patarin approach, there is a threat that over time an attacker may determine the random transformation used. Furthermore, since A(v) is output from the table, there is a potential for an attacker to obtain information by using second order power analysis (using power samples of A(v) and A(v) exclusive-or'd with S(v) ) to obtain a correct key guess.

It would be preferable to implement efficient substitution-table masking countermeasures for resisting DPA attacks on the inputs and outputs to the substitution tables. It would also be advantageous to implement an efficient substitution-table masking countermeasure that may be scaled in complexity.

### GENERAL

According to an aspect there may be provided a countermeasure for a cryptographic process or system. In an embodiment, the countermeasure may comprise a computing device implemented method for executing cryptographic steps on the computing device such that the cryptographic steps are less susceptible to a power analysis attack on the computing device.

According to a further aspect, there may be provided a method and system that includes selecting a mask table and combining the selected mask table with masked substitution tables and one or more alternate mask tables in a cryptographic process.

According to a further aspect, there may be provided an encryption method using a selected input mask from a plurality of input masks and a set of substitution tables in an encryption round, comprising:
(a) masking a plaintext input with the plurality of input masks and the set of substitution tables, producing a masked intermediate output for each of the plurality of input masks and the set of substitution tables; and,
(b) extracting from the masked intermediate outputs a masked output corresponding to the plaintext input masked with the selected input mask and the set of substitution tables.

According to a further method, there may be provided an encryption method using more than one input mask and a set of substitution tables in an encryption round, comprising:
(a) generating a first set of masked tables from a first input mask;
   generating a set of masked substitution tables from the first input mask and the set of substitution tables;
   generating a second set of masked tables from a second input mask and the set of masked substitution tables;
(b) masking a plaintext input using the first set of masked tables, the second set of masked tables and the set of masked substitution tables;
(c) in any order before (d), selecting a selected input mask from either the first input mask or the second input mask for masking the plaintext input to produce a masked output from the encryption round; and,
(d) producing the output corresponding to the plaintext input masked with the set of substitution tables and the selected input mask;
   whereby both the first input mask and the second input mask are used in the encryption round, but the output is masked with only the selected input mask.

Alternatively, there may be provided an encryption method using more than one input mask and a set of substitution tables in an encryption round, comprising:
(a) generating a first set of masked tables from a first input mask;
   generating a set of masked substitution tables from the first input mask and the set of substitution tables;
   generating a second set of masked tables from a second input mask and the first set of masked tables;
(b) masking a plaintext input using the first set of masked tables, the second set of masked tables and the set of masked substitution tables;
(c) in any order before (d), selecting a selected input mask from either the first input mask or the second input mask for masking the plaintext input to produce a masked output from the encryption round; and,
(d) producing the output corresponding to the plaintext input masked with the set of substitution tables and the selected input mask;
whereby both the first input mask and the second input mask are used in the encryption round, but the output is masked with only the selected input mask.

The encryption method may further comprise after generating the second set of masked tables, mixing the first set of masked tables and the second set of masked tables with the set of masked substitution tables to generate three sets of mixed mask tables; masking the plaintext input with the mixed mask tables to produce a mixed output; and, extracting the output corresponding to the plaintext input masked with the set of substitution tables and the selected input mask from the mixed output.

The encryption method may further comprise after selecting the selected input mask, setting one or more indexing variables to correspond with the selected input mask; and, extracting the output by indexing the mixed output with the one or more indexing variables.

Alternatively, the encryption method may further comprise (f) masking a plurality of plaintext inputs using the first set of masked tables, the second set of masked tables and the set of masked substitution tables. In addition, the method may further comprise: (g) re-selecting either the first input mask or the second input mask as the selected input mask for masking an output from the encryption round; and, (h) masking a further plurality of plaintext inputs using the first set of masked tables, the second set of masked tables and the set of masked substitution tables and, for each of the further plurality of plaintext inputs, producing a further output corresponding to the plaintext input masked with the set of substitution tables and the re-selected input mask; whereby for each of the further plurality of plaintext inputs, both the first input mask and the second input mask are used in the encryption round, but the output is masked with only the re-selected input mask.

Alternatively, there may be provided an encryption method using a plurality of input masks and a set of substitution tables in an encryption round, comprising:
(c) identifying a first input mask and one or more remaining input masks from the plurality of input masks;
   generating a set of first masked tables for the first input mask;
   generating a set of masked substitution tables from the first input mask and the set of substitution tables;
   generating one or more sets of remaining masked tables, each set corresponding to the one or more remaining input masks, and the other sets of masked tables;
(d) masking a plaintext input using the set of first masked tables, the one or more sets of remaining masked tables and the set of masked substitution tables;
(e) in any order before (d), selecting either the first input mask or one of the one or more remaining input masks for masking an output from the encryption round; and,
(f) producing the output corresponding to the plaintext input masked with the set of substitution tables and the selected input mask;
whereby the first input mask and the one or more remaining input masks are used in the encryption round, but the output is masked with only the selected input mask.

Alternatively, there may be provided an encryption method using a plurality of input masks and a set of substitution tables in an encryption round, comprising:
(a) identifying a first input mask and one or more remaining input masks from the plurality of input masks;
   generating a set of first masked tables for the first input mask; generating a set of masked substitution tables from the first input mask and the set of substitution tables;
   generating one or more sets of remaining masked tables, each set corresponding to the one or more remaining input masks, and the set of masked substitution tables;
(b) masking a plaintext input using the set of first masked tables, the one or more sets of remaining masked tables and the set of masked substitution tables;
(c) in any order before (d), selecting either the first input mask or one of the one or more remaining input masks for masking an output from the encryption round; and,
(d) producing the output corresponding to the plaintext input masked with the set of substitution tables and the selected input mask;
whereby the first input mask and the one or more remaining input masks are used in the encryption round, but the output is masked with only the selected input mask.

In a preferred arrangement, the methods above may be implemented by a computing device. In an embodiment, a computing device implemented method may be provided for carrying out cryptographic steps to obtain a round output, the round output corresponding to a round input to a cryptographic round masked by a set of substitution tables and a selected set of mask tables corresponding to a selected input mask selected from a first input mask or a second input mask, the computing device comprising a processor in communication with a memory for executing the cryptographic steps, the method comprising:
the processor producing three masked intermediate outputs by:
   masking the round input with entries from a set of masked substitution tables consisting of entries from the set of substitution tables each masked with the first input mask,
   masking the round input with entries from a set of first mask tables generated from the first input mask and,
   masking the round input with entries from a set of second mask tables generated from the second input mask, entries from the set of first mask tables and entries from the set of masked substitution tables;
   the processor extracting from the masked intermediate outputs a masked output corresponding to the round input masked with the set of masked substitution tables and entries from the selected set of mask tables.

In accordance with other aspects of the invention, such encryption method may be used in cryptographic operations carried out in accordance with the AES (Advanced Encryption Standard) and DES (Data Encryption Standard) approaches known to those in the art.

In different cryptographic operations implemented in computing devices, substitution tables are used. For example in AES and in Triple DES ("3DES"), multiple S-boxes are utilized in encryption of plaintext. To provide countermeasures for security attacks on such cryptographic operations the input and the output of such substitution tables may be masked. The security provided by such a masking of the table output may, however, itself be subject to attack.

### Brief Description of the Drawings

In drawings which illustrate by way of example only a preferred embodiment of the invention,

Figures 1a and 1b are block diagrams showing embodiments of a computing device.

Figure 2 is a block diagram showing substitution tables in accordance with a prior art encryption method such as applied to AES encryption;

Figure 3a are block diagrams showing a prior art method for generating a masked substitution table and mask table for encryption;

Figure 3b is a block diagram showing the masked substitution tables and mask tables in accordance with a prior art encryption method;

Figure 4 is a block diagram showing a method for generating masked substitution tables and masked tables;

Figures 5a and 5b are block diagrams showing embodiments of methods for generating masked tables from the masked substitution tables;

Figure 6 is a block diagram showing mixed tables for use in an encryption round;

Figure 7 is a diagram illustrating a method for generating mixed tables;

Figures 8a and 8b are block diagrams illustrating a method for extracting a masked output from intermediate outputs;

Figures 9 and 10 are block diagrams illustrating the resulting masked output; and,

Figure 11 is a block diagram illustrating the sequence of steps in an encryption round and setting up the encryption round.

Figure 12 is a series of block diagrams illustrating various steps in carrying out an embodiment.

### Description of Preferred Embodiments

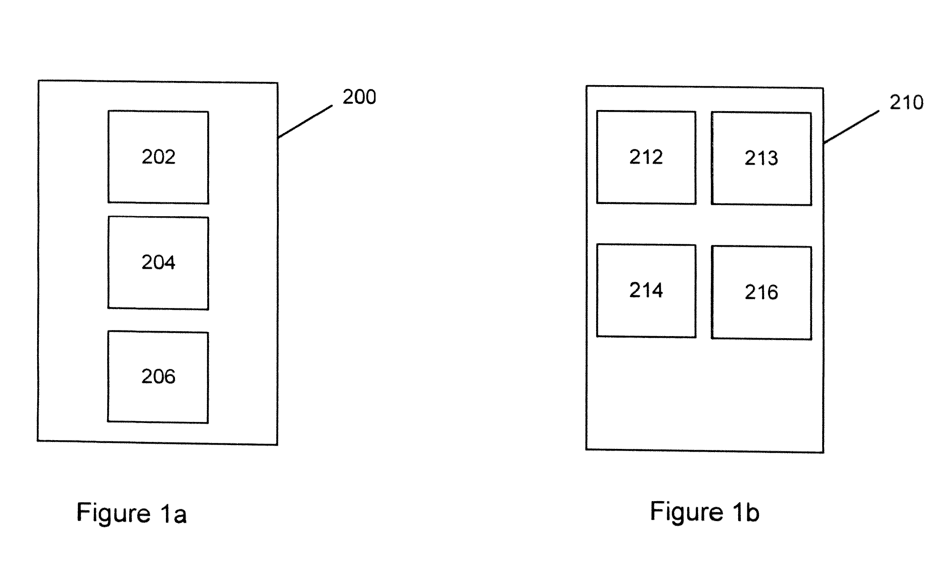

The embodiments described herein may be implemented on a computing device that may comprise, for instance, a computing device 200, 210 such as those illustrated in Figures 1a and 1b. The computing device 200 may, for instance, communicate with other devices over a wireless communication system or enterprise system. In an embodiment, the computing device 200 may be a mobile device with two-way communication and advanced data communication capabilities including the capability to communicate with other mobile devices or computer systems through a network of transceiver stations. The computing device 200 can also have voice communication capabilities.

Figure 1a is a block diagram of an exemplary embodiment of a computing device 200. The computing device 200 includes a number of components in operative communication such as a processor 202 that controls the overall operation of the computing device 200, persistent non-transitory memory 204, such as flash memory or a hard disc, and RAM 206. In this embodiment, program code comprising software instructions may be stored in the persistent memory 204 and loaded into RAM 206 for execution by the processor 202. Program code may be stored in the persistent memory 204, either at manufacture, or may be stored by loading program code onto the device 200 through a data port or wireless connection (not shown).

As is understood, execution of the program code by the processor 202 renders the general purpose processor 202 operative to perform cryptographic steps comprising methods of executing cryptographic steps on data stored in the memory 204, 206 addressable by the processor 202. In an alternate embodiment, illustrated in Figure 1b, the encryption methods may be executed through hardware, for instance by a special-purpose processor on decoder 213 in operative communication with a processor 212 of computing device 210. In the embodiment of Figure 1b, device 210 further comprises persistent memory 214 and RAM 216. In a hardware embodiment, decoder 213 is designed to be operative to execute the methods through hardware means. This application refers to both embodiments as a processor operative to carry out a series of steps on data stored in memory 204, 206, 214 or 216 of the device 200, 210.

In an aspect, a computing device program product may be provided for execution on the computing device 200, the computing device program product comprising software instructions executable by a processor 202 of the device 200 to render the computing device 200 operative to carry out steps of the method. In an embodiment, the computing device program product may comprise computer readable program code means embodied on a storage medium such as an optical disc, hard disc or other non-transitory memory.

The description to follow will describe encryption methods based upon a standard ten round encryption using 4 substitution tables (S-boxes) in each round. The encryption methods may be executed to process data generated, or received, by the device 200, 210 to generate encrypted data. While this standard framework is commonly accepted and used for encryption, it will be appreciated that other numbers of encryption rounds and substitution tables are possible. The descriptive use of such standard numbers of S-boxes and rounds in this application are not intended to be limiting except as specified in the claims.

The encryption methods may be implemented as a computer program product that includes program code that operates to carry out the steps in the process described. The methods may be implemented as one or more computer systems (which includes a subsystem or system defined to work in conjunction with other systems) for encryption that includes elements that execute the functions as described.

The systems may be defined by, and the computer program product may be embodied in non-transitory storage media such as magnetic, electronic or optical storage media. The processes described may be implemented on computing devices as methods to be carried out by a combination of computing code and hardware embodied in the computing devices (the process being in this case a computing device-implemented method). Computing devices on which the methods are able to be implemented include full-featured computers, mobile devices such as wireless mobile devices, and other devices incorporating computing system technology. The methods are particularly applicable to devices where memory storage is limited and power consumption is an important consideration in device operation.

The methods are described with reference to encryption steps for the AES encryption process. However, it will be appreciated that the methods may be implemented with respect to decryption processes and to other iterative cryptographic processes that include keys and substitution tables and for which countermeasures for attacks such as DPA are desirable. The iterative nature of the cryptographic processes described may arise from a single encryption or decryption process (such as where rounds are carried out as exemplified in the AES process referred to below). Another way in which a cryptographic process has an iterative aspect is where the cryptographic process is used successively to encrypt or decrypt. In either case, there is a set of steps that is subject to iteration and over which set of steps the masking described herein is able to be carried out.

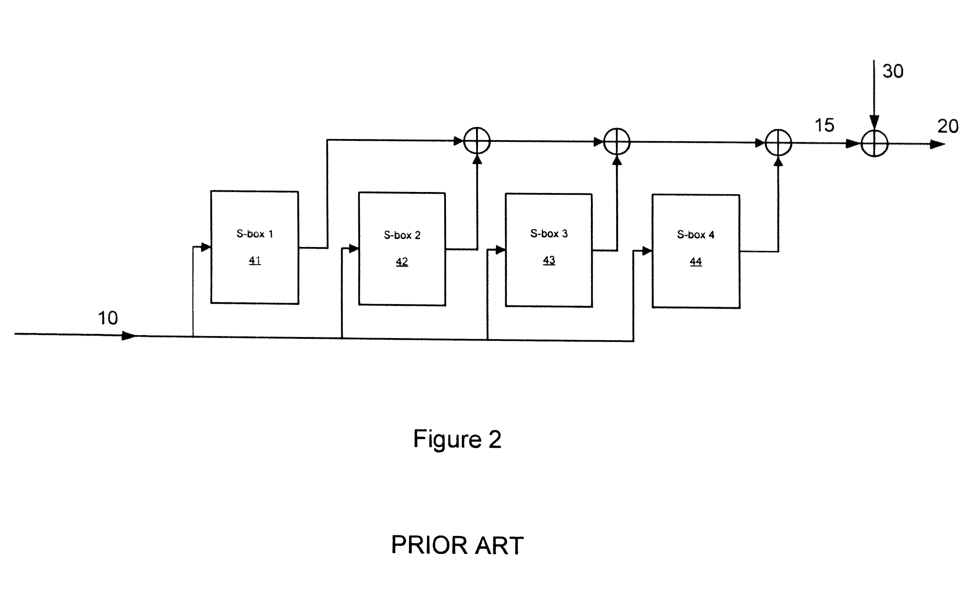

Referring to Figure 2, a single round of a prior art encryption scheme is illustrated with an input 10 that is distributed to four (4) S-box tables 41, 42, 43, 44. The S-box tables 41, 42, 43, 44 may be standard pre-defined tables set by an encryption standard such as the Advanced Encryption Standard (AES). While it is not mandatory to use such pre-defined tables, most algorithms preferably use the pre-defined tables to ensure secure encryption without the need to validate independently generated alternate substitution tables.

The output from each of the S-box tables 41, 42, 43, 44 is combined to provide a table output 15 that may be masked with a mask 30 to provide the round output 20. Round output 20 from an encryption round becomes round input 10 for the next input round. While masking of the output 15 is illustrated as occurring at the end of the round, it could alternatively be presented as occurring at the beginning of the round on a round input that is a 'non-masked' input. Typically the first round requires the input to be masked to create round input 10. Subsequent rounds may then be depicted as illustrated in Figure 2 where the masking takes place at the end of the round to produce a masked output for input to the next round.

The masking may be carried out as a bit-wise exclusive-or operation (XOR) with respect to different values expressed in binary output (XOR ― depicted as "⊕"). While other masking operations such as arithmetic masking may be used, the XOR operation is a preferred mechanism for masking in encryption operations.

A computing device executing the encryption method depicted in Figure 2 is susceptible to a variety of cryptographic attacks including a DPA attack.

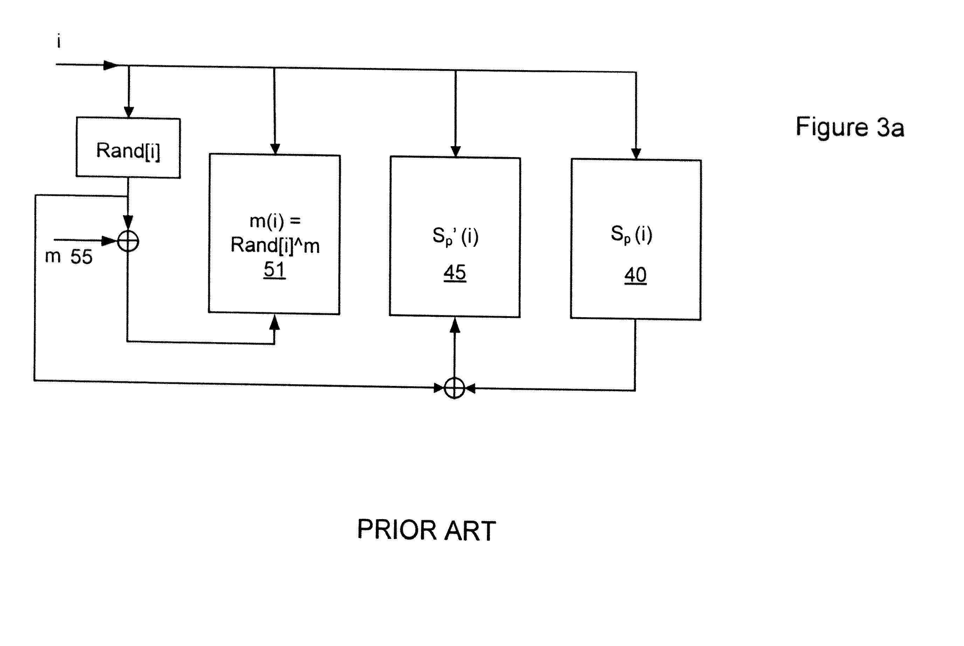

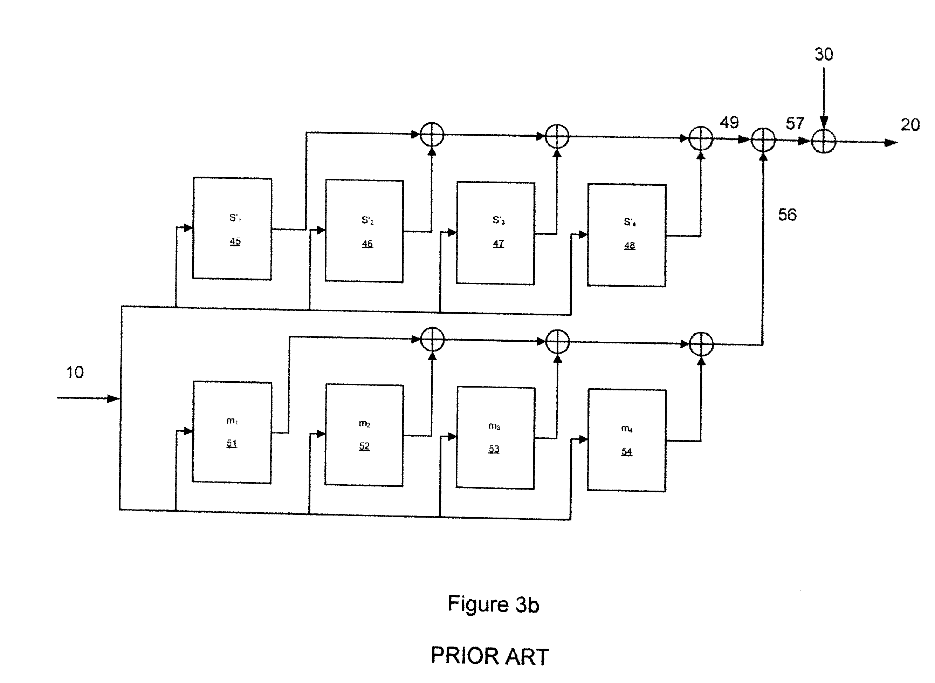

An alternate prior art cryptographic method is illustrated in Figures 3a and 3b employing masking of the S-box outputs. The round of figure 3b may be constructed by replacing the original S-boxes 41, 42, 43, 44 from Figure 2 with a set of masked S-boxes (Sₚ') 45, 46, 47, 48 and a matching set of mask tables (mₚ) 51, 52, 53, 54 as calculated in Figure 3b using a mask m 55. The output 49 of the masked S-boxes (Sₚᵢ') 45, 46, 47, 48 may be combined with the output 56 of the mask tables (mₚ) 51, 52, 53, 53 to produce a masked S-box output 57 that may be masked with a key mask 30 to produce a round output 20.

The masked S-boxes (Sₚ') 45, 46, 47, 48 and mask tables (mₚ) may be generated as illustrated in Figure 3b, by masking each of the S-box values with a random mask 55 and building a corresponding mask table (mₚ) 51, 52, 53, 54 for each S-box table (Sₚ) 41, 42, 43, 44. The mask tables (mₚ) 51, 52, 53, 54 are built by masking each mask applied to a corresponding S-box entry with a mask value m 55. There are several ways to obtain the random masks including generating masks using a random number generator, as shown in figure 3b, or using a look-up table approach to select masks from one or more mask tables. Such a table output masking method is further described in CA 2, 508, 160 (Gebotys).

In previous encryption algorithms, as depicted in Figures 2, 3a and 3b, an attacker having control over the input 10 can base an attack by varying the input 10, analysing the output 20 and using DPA techniques on the masking process to attempt to obtain additional information which in time may allow an attacker to determine the mask 55.

In an improved encryption algorithm a choice of input mask from a set of available input masks is provided for masking the address line or input for each S-box in an encryption round. The secure selection of a selected input mask from two or more available input masks provides for additional security against cryptographic attacks such as DPA.

The process may be generally described as making a random secure decision to select an input mask from two or more available input masks to produce a masked output from the encryption round that has been masked with the selected mask. The selected input mask and at least one non-selected input mask from the available input masks are used to mask the S-box tables. Thus, there is more than one mask per S-box table used in the encryption round. By repeating the preferably random selection, the selected mask will change from round to round, though the tables accessed will not. As a result, side channels that indicate which table is being accessed and used in the encryption round do not leak information that could be used by an attacker to identify, or obtain information about, the input mask being used in the encryption round.

The choice of input mask may occur at various periods such as each round, each encryption cycle (for instance after 10 rounds in a 10 round encryption algorithm), each invocation of the plaintext cipher or after some number of encryption cycles that may be fixed or varying. The frequency with which the choice of input mask is made may be selected to minimise the necessary calculations for a desired encryption complexity.

Where the selected input mask changes from round to round, the order of selected input mask for each round must be tracked in order to apply the correct selected mask to decrypt the encrypted output.

In an embodiment the selected input mask and at least one non-selected mask from the set of available input masks are employed in the encryption round to further disguise the choice of input mask. The selected input mask to be used for a given input may preferably be selected prior to carrying out the table masking process. The selection may occur by random selection, pseudo-random selection, or some other selection means unknown to a third party cryptographic attacker.

Typically a cryptographic attack such as DPA requires the completion of many cycles before useful information can be derived from the attack. Accordingly, a typical embodiment may select an input mask after several cycles to limit the computational overhead of the encryption algorithm while still maintaining resistance to DPA attacks.

According to an exemplary embodiment two available mask values (fa and fb) may be provided for each S-box table, with both masks being used in the encryption process, but only the selected mask being ultimately used for encryption masking. For a typical round as described above, four S-boxes are used (S₁, S₂, S₃, S₄) and consequently each set includes 4 mask values (fa₁, fa₂, fa₃, fa₄ and fb₁, fb₂, fb₃, fb₄).

In an alternate embodiment, additional input masks beyond the second set of mask values fbₚ may be used in the encryption process, but similarly only the selected mask being ultimately used for encryption masking.

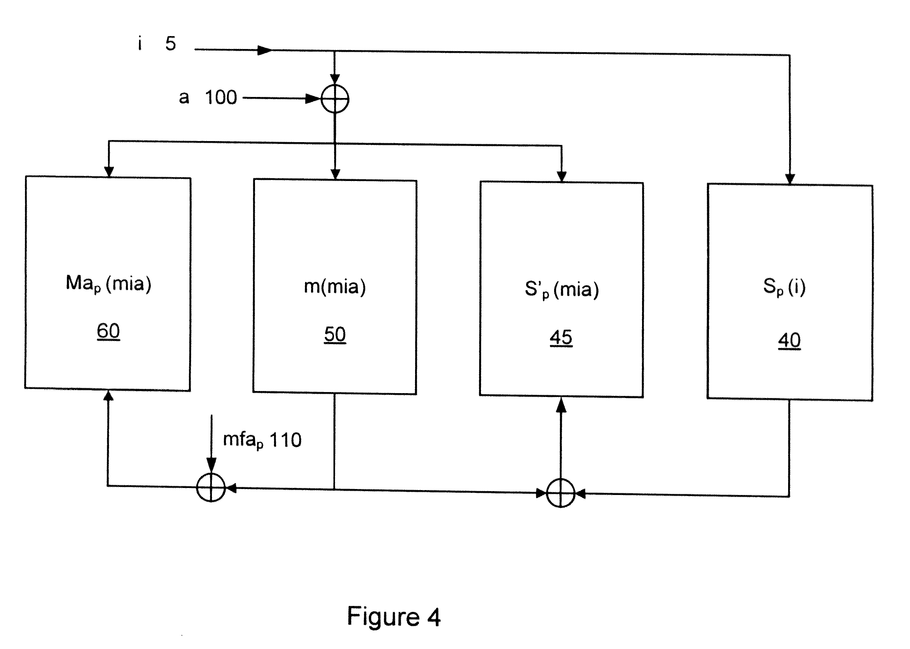

Referring to Figures 4, 5a, 5b and 6, the embodiment may be illustrated using mask tables and masked S-box tables for convenience. As will be appreciated, while the use of a table *per se* is not required, most encryption algorithms use arrays or tables as a convenient memory structure for storing and manipulating data. An index i 5 may be used to index through all addresses in an S-box table 40 and a mask table 50. For a 256 bit S-box table, i may increment through 0 to 255, for instance.

Referring to Figure 4, for each increment of i 5, the index i 5 is preferably masked with a first index mask a 100 (a⊕i = mia). The resulting masked index mia 7 may be used to address a first masked table Maₚ(mia) 60, a masking table m(mia) 50 and a masked S-box Sₚ' (mia) 45.

The entries in the masked S-box Sₚ'(mia) 45 may be computed by addressing the S-box table Sₚ(i) 40 with the index i 5 and masking the corresponding entry with a random mask. As depicted in Figure 4, the random mask is obtained by accessing the mask located at the entry in the mask table m() indexed by the masked index mia 7 (m(mia)). The resulting masked S-box entry may be entered into the masked S-box Sₚ'(mia) 45 at the position addressed by the masked index mia 7 (Sₚ'(mia) = Sₚ(i) ⊕m(mia)).

Figure 4 depicts this masking operation as a table look-up using the masked index 7 to address a masking table m(mia) 50 containing mask values. While use of such a look-up table is convenient and a common means used to mask, as will be appreciated other masking means could be used such as a random number generator.

The entries in the masked table Maₚ(mia) 60 addressed by the masked index mia 7 may be computed by addressing the masking table m(mia) 50 with the masked index mia 7 and masking the associated entry with the mask value mfaₚ 110 associated with the current S-box Sₚ(i) 40. As explained above, use of a masking table m(mia) 50 is not required, so long as the same output of a random number generator is used on the corresponding entry in both the masked table Maₚ(mia) 60 and the masked S-box Sₚ'(mia) 45.

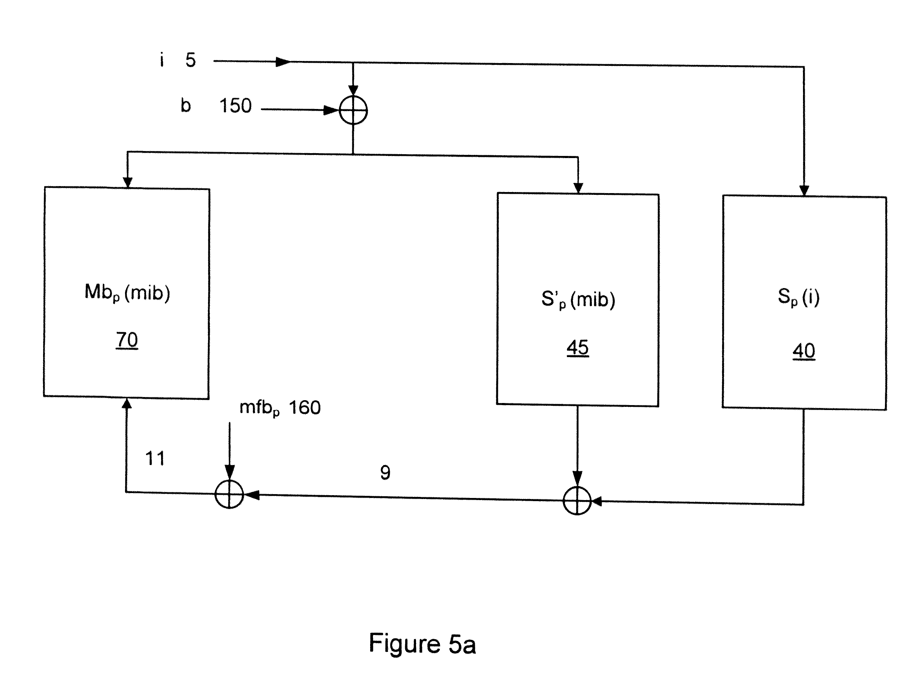

Figure 5a depicts the generation of the second masked table Mbₚ(mib) 70 from the masked S-box Sₚ'(mib) 45. The second masked table Mbₚ(mib) 70 may be generated by addressing the S-box Sₚ(i) 40 with the index 5 and addressing the masked S-box Sₚ'(mib) 45 with a second preferably masked index mib 8 generated by masking the index 5 with a second index mask b 150 (b⊕i = mib). The entry in the S-box Sₚ(i) 40 addressed by i 5 may then be masked with the entry in the masked S-box Sₚ'(mib) 45 addressed by the second masked index mib. The result 9 may be masked with the second mask value mfbₚ 160 corresponding to the current S-box Sₚ(i) 40. The result 11 is the entry in the second masked table Mbₚ(mib) 70 addressed by the second masked index mib 8.

After generation of the masked substitution tables S₀', S₁', S₂', S₃' and masked tables Ma₁, Ma₂, Ma₃, Ma₄ and Mb₁, Mb₂, Mb₃, Mb₄ a cryptographic round may be initiated.

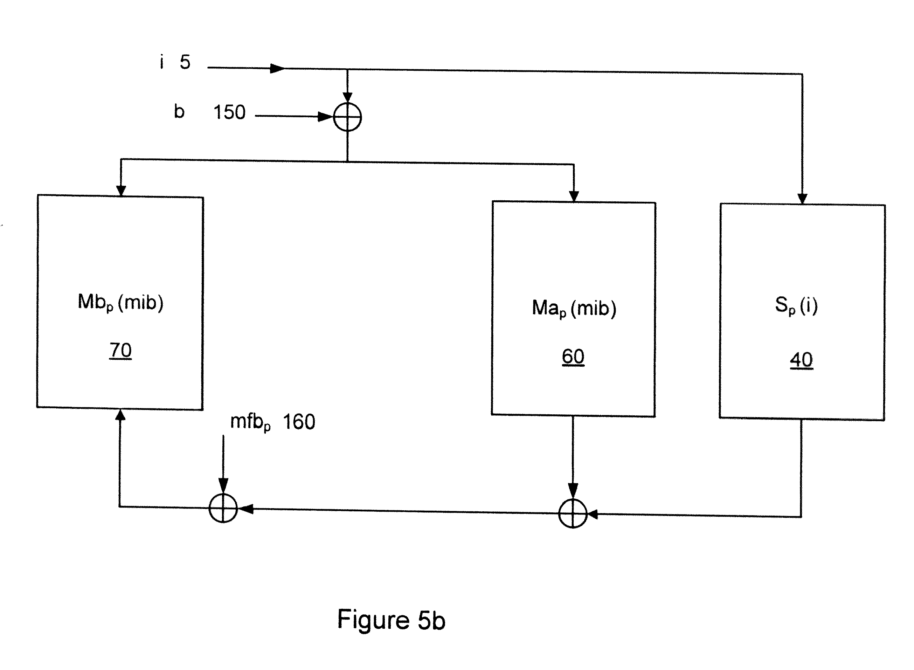

Figure 5b illustrates an alternate embodiment for generation of the second masked table Mbₚ(mib) 70. In the alternate embodiment, masked table Maₚ(mib⊕i) is used in place of the masked substitution table Sₚ' at box 45 to as input to the second masked table Mbₚ(mib) 70. The alternate embodiment may also be extrapolated for a plurality of input masks where successive input mask tables may be defined by previously defined masked tables. For instance, hypothetical masked table Mdₚ may be generated using Sₚ', as in Figure 5a, or using Maₚ Mbₚ, or hypothetical Mcₚ according to the method illustrated in Figure 5b. That is, the masked tables to be generated correspond to the masked tables that make up box 45 in Figures 5a and 5b. The choice of which table is used to generating the masked tables will affect how the masked output is extracted, as described below.

In a simplified embodiment, the masked tables of the selected input mask are used to mask the masked substitution tables and the masked tables of the non-selected input mask(s) are accessed, though not applied to the substitution tables. This simplified embodiment adds complexity to a standard encryption round, especially if the selected input mask is chosen relatively frequently so that a different mask is applied every round, or every few rounds. While the simplified embodiment may be vulnerable to some higher order cryptographic attacks, higher frequency mask selections may provide sufficient robustness in certain applications while providing a relatively low computational complexity. Implementation of this embodiment may be useful where power, computation or memory constraints are such that it is impractical to apply the masked tables of the non-selected input mask(s), but additional security is desired.

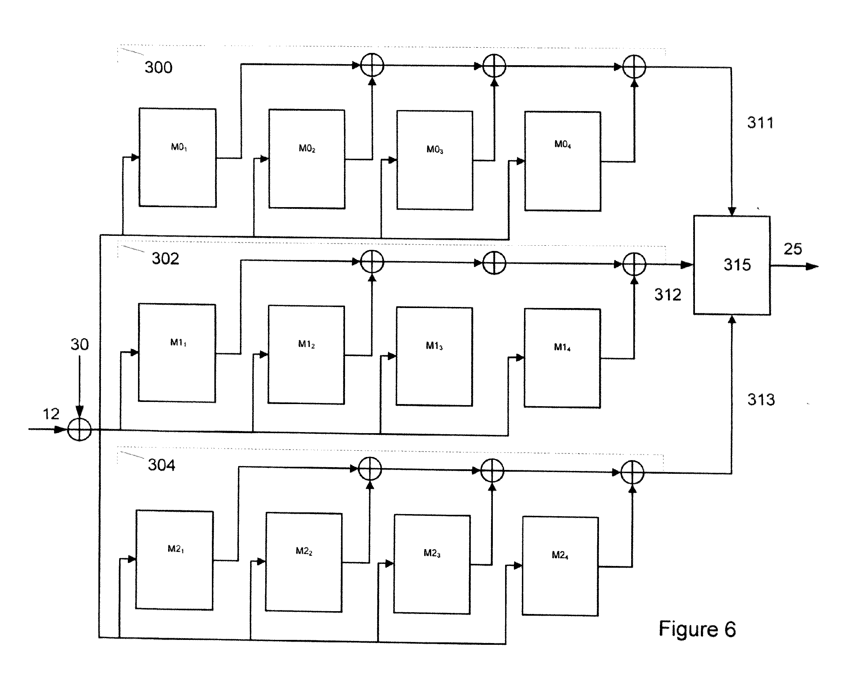

In an alternate embodiment depicted in Figure 6, where two masks are being employed, the masked substitution tables S₀', S₁', S₂', S₃' and masked tables Ma₁, Ma₂, Ma₃, Ma₄ and Mb₁, Mb₂, Mb₃, Mb₄ are mixed, split and merged to provide three or more sets of mixed encryption tables M0ₚ 300, M1ₚ₂ 302, M2ₚ 304. More generally, the number of sets of mixed tables may be the described as a combined number of sets of tables including the number of sets of mask tables and the set of masked substitution tables. Thus, there is a set of mixed tables corresponding to each of: the sets of mask tables and the set of masked substitution tables. Since the tables are all the same size, this allows all bit entries of the sets of mask tables and the set of masked substitution tables to be entered in bit locations within the sets of mixed tables.

An input to the encryption round is input to the sets of mixed to produce mixed masked intermediate output vectors. The mixed masked intermediate outputs contain bits relating to the masked substitution tables masked with the selected input mask and the non-selected input mask(s). The correct set of bits relating to the selected input mask may be extracted from the mixed masked intermediate outputs, for instance by using an index variable corresponding to the selected input mask. The index variable may be set according to the selection of input mask. The bits relating to the non-selected mask are not extracted by the set index variable, and as a result do not form part of the output from the encryption round. Thus, while both the selected input mask and the non-selected input mask(s) are applied to the substitution tables, and used in the computation, only the masked entries corresponding to the selected input mask are carried through as an output for the encryption round.

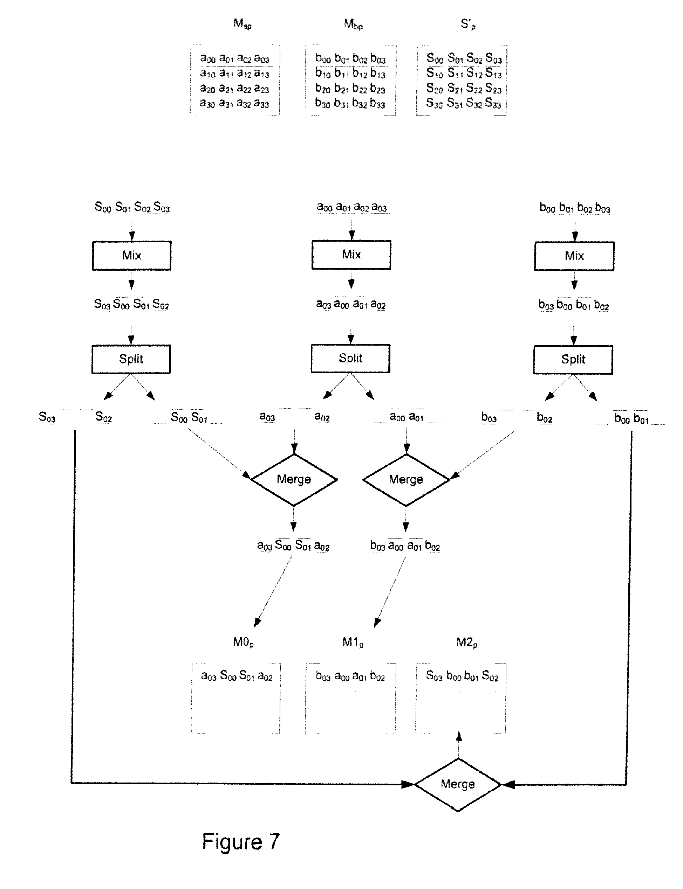

The number of mixed tables in each set corresponds to the number p of S-boxes employed in the round and the number of sets corresponds to the number of input masks included in the encryption algorithm, with an additional set to accommodate the masked substitution tables. In the example of Figure 7 based on 4 S-boxes, p=4, and two possible input masks Maₚ Mbₚ, there are 4 mixed mask tables in each set, and 12 mixed mask tables in the round. As will be appreciated, the input masks could be drawn from a larger set of available input masks to provide additional variation.

In order to create the sets of mixed mask tables M0ₚ 300, M1ₚ 302, M2ₚ 304, the masked tables Ma₁, Ma₂, Ma₃, Ma₄ and Mb₁, Mb₂, Mb₃, Mb₄ are combined with the masked substitution tables S₀', S₁', S₂', S₃' by mixing the entries of the masked tables Maₚ 60, Mbₚ 70 and masked S-box table Sₚ' 45 corresponding to each S-box Sₚ 40. For instance, for the first S-box S₁ (p=0), the byte entries of Ma₁, Mb₁ and S₁' may be mixed row-wise to create the rows of the first mixed table in each set of mixed tables M0₁, M1₁, M2₁.

While various mixing strategies are possible, an exemplary mixing strategy is illustrated in Figure 7. Preferably when mixing, mask a of byte j and mask b of byte j are transferred to the same byte location. This restriction on mixing ensures a straight line code in the body of the cipher. The exemplary mixing strategy of Figure 7 may be repeated for all words at corresponding locations in the masked substitution tables S₀', S₁', S₂', S₃' (S'p) and masked tables Ma₁, Ma₂, Ma₃, Ma₄ (Maₚ) and Mb₁, Mb₂, Mb₃, Mb₄ (Mbₚ). As illustrated in Figure 7, for each of the three words at the same addresses in the masked tables and masked substitution tables, the word bytes (rows) are mixed, split, merged with other bytes and stored in the three mixed tables M0ₚ 300, M1ₚ 302, M2ₚ 304. The process is repeated for all word bytes (rows) in the masked substitution tables S₀', S₁', S₂', S₃' (S'p) and masked tables Ma₁, Ma₂, Ma₃, Ma₄ (Maₚ) and Mb₁, Mb₂, Mb₃, Mb₄ (Mbₚ).

After generating the mixed tables M0ₚ 300, M1ₚ 302, M2ₚ 304, an encryption round may be performed as illustrated in Figure 6. Unlike the prior art masked encryption round, the masked intermediate outputs: output1 311, output2 312, output3 313 from three sets of mixed tables M0ₚ 300, M1ₚ 302, M2ₚ 304 are not directly combined by an XOR operation. Since the masked intermediate outputs: output 311, output2 312, output3 313 contain the results of masking with both the selected mask and the non-selected mask, it is first necessary to extract the output bytes corresponding to the selected mask.

Referring to Figure 6 an input 12, which could be a plaintext input for the first round, is first masked with a round key mrk 30. As explained above, with reference to Figure 2, the encryption round may alternatively be presented with the masking taking place on the output 25, where round input 10 is a 'masked' input, being the masked output from a previous round. The embodiment of Figure 6 is illustrating input 12 as being an 'unmasked' input, for instance on the first round, which is being masked for input to the encryption round.

The masked round key may be generated from a selected input mask (mfa₀⊕mfa₁⊕mfa₂⊕mfa₃⊕mrk = mia, mfb₀⊕mfb₁⊕mfb₂⊕mfb₃⊕mrk = mib). To simplify the process masked round keys corresponding to each of the input masks may be precalculated and stored. Indexing variables, as described below, may be used to select the appropriate masked round key mrk 30 corresponding to the selected input mask (i.e. the selected masked round key). The choice of selected masked round key mrk 30 must be updated for each selection of a selected input mask.

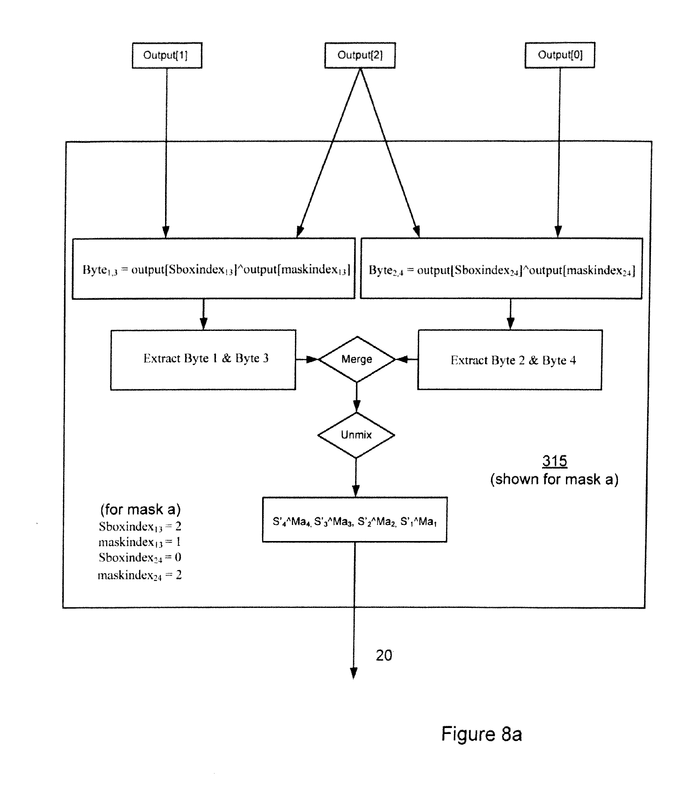

Figure 6 depicts the extraction and combination of the relevant bytes from the masked intermediate outputs: output[0] 311, output[1] 312, output[2] 313 as occurring in block 315. The steps in extracting and combining the relevant bytes are illustrated in Figure 8a. In the example given, the masked intermediate outputs: output[0] 311, output[1] 312, output[2] 313 may be accessed using an indexing variable to extract the bytes that correspond to the selected mask. Depending upon the routine used for mixing the tables, the components of the masked substitution tables S₁', S₂', S₃', S₄' (S'p) and masked tables Ma₁, Ma₂, Ma₃, Ma₄ (Maₚ) and Mb₁, Mb₂, Mb₃, Mb₄ (Mbₚ) from the mixed tables M0ₚ 300, M1ₚ 302, M2ₚ 304 will be located in different masked intermediate outputs311, 312, 313 and different locations in each of the masked intermediate outputs311, 312, 313. Figure 8a depicts exemplary masked intermediate outputs311, 312, 313 to illustrate a distribution of the components (S'p, Maₚ, and Mbₚ) of the mixed tables M0ₚ 300, M1ₚ 302, M2ₚ 304 that are contained in the masked intermediate outputs311, 312, 313.

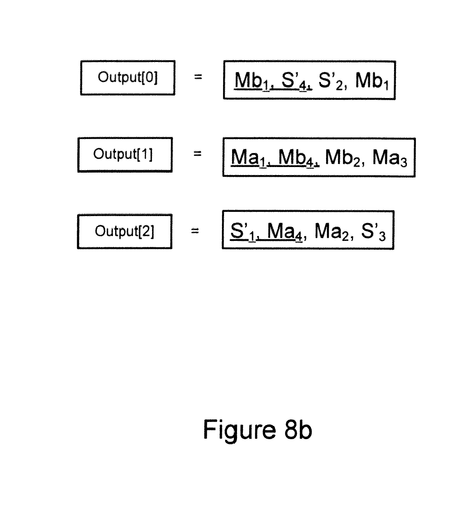

In the example of figure 8b four indexing variables maskindex₁₃, maskindex₂₄, Sboxindex₁₃, Sboxindex₂₄ are used to access the data corresponding to the selected masked tables and the corresponding masked tables from the masked intermediate outputs 311, 312, 313. As will be appreciated, describing the process as using of indexing variables in this fashion is for ease of understanding and other known methods for indexing and accessing the data are possible, including pointers, sets of pointers or masking techniques.

Maskindex₁₃ is the index that extracts the masked value for S₁' and S₃'. Maskindex₂₄ is the index that extracts the masked value for S₂' and S₄' . Sboxindex₁₃ is the index that extracts the masked S' value for S₁' and S₃'. Sboxindex₂₄ is the index that extracts the masked S' value for S₂' and S₄'.

In the example given, the indexing variables may be set as follows:

S₁' and S₃' Processing: maskindex₁₃ = 1 for mia; maskindex₂₄ = 0 for mib; Sboxindex₂₄ = 2

S₂' and S₄' Processing: maskindex₂₄ = 2 for mia; maskindex₂₄ = 1 for mib; Sboxindex₂₄ = 0

The indexing variables are set to extract the bytes that correspond to the selected mask based upon the choice of input mask. In an embodiment, the indexing variables may be set to an integer value used to index the masked intermediate outputs 311, 312, 313. As will be appreciated, the bytes that correspond to the selected mask may also be extracted by other means such as a masking operation, pointer offsets or other known means of accessing memory. For clarity, this description is described in terms of selecting an integer value to index the output vectors.

The relevant bytes may be extracted by indexing the masked intermediate outputs 311, 312, 313 with the indexing variables to assemble the masked S-box tables:

Byte 1 and 3 Processing: Byte_{1,3} = output[Sboxindex₁₃]^output[maskindex₁₃]

Byte 2 and 4 Processing: Byte_{2,4} = output[Sboxindex₂₄]^output[maskindex₂₄]

After extraction the bytes may be merged and unmixed to assemble the masked output 25 for the round that corresponds to the selected input mask.

As described above with reference to Figures 5a and 5b, the sets of masked tables may be generated from an input mask and the set of masked substitution tables, or they may generated from an input mask and a set of previously masked tables (i.e. Maₚ in Figure 5b). The extraction process above is organized to extract the selected mask and the corresponding mask for the selected mask. Where the set of masked substitution tables is the corresponding masked table used to generate all masked tables, then the process of extraction described above may be analogously performed for any of the plurality of input masks. Where, the set(s) of corresponding masked tables is a previously generated set(s) of masked tables, then the extraction process must be re-organized to extract the bytes for the selected set of masked tables and the set of corresponding masked tables used to generate that set. With reference to Figure 5b, if Mbₚ is the selected set of masked tables, then Maₚ is the corresponding set of masked tables used to generate Mbₚ. It will be appreciated that various combinations of corresponding masked tables are available for use where a plurality of input masks are available.

In an embodiment where the masked substitution tables Sₚ' are used to generate all of the masked tables (i.e. Sₚ' is the set of corresponding masked tables for all of the input masks), then the extraction process may consistently extract the bits corresponding to the masked substitution tables Sₚ' and the selected masked tables. Alternatively, where one or more sets of masked tables are used to generate one or more other sets of masked tables, then the extraction process for each of the sets of masked tables must be organized to extract the bits for the set of masked tables and the corresponding set of masked tables used to generate that set.

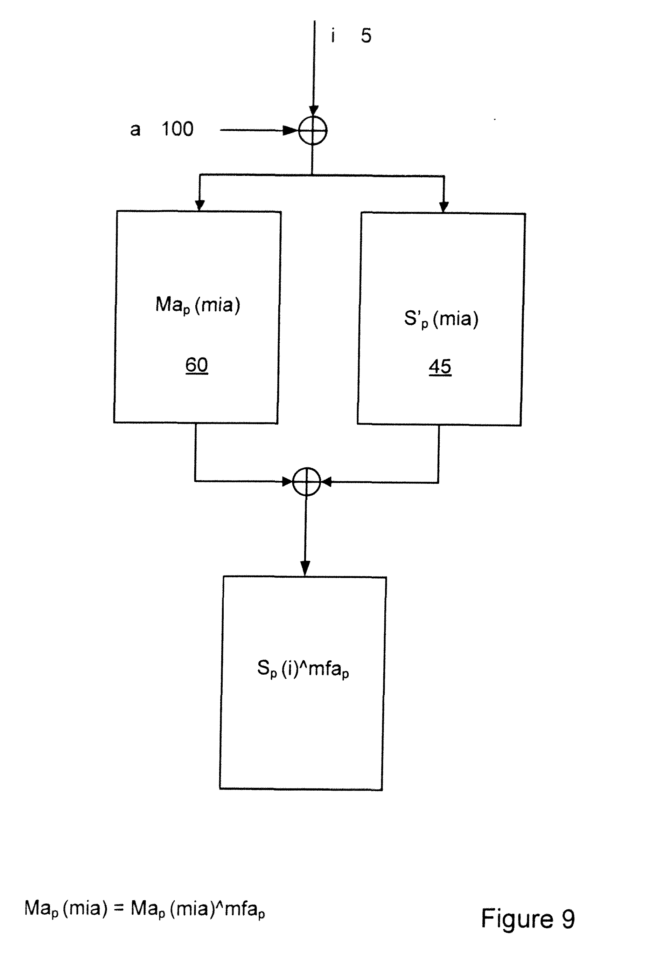

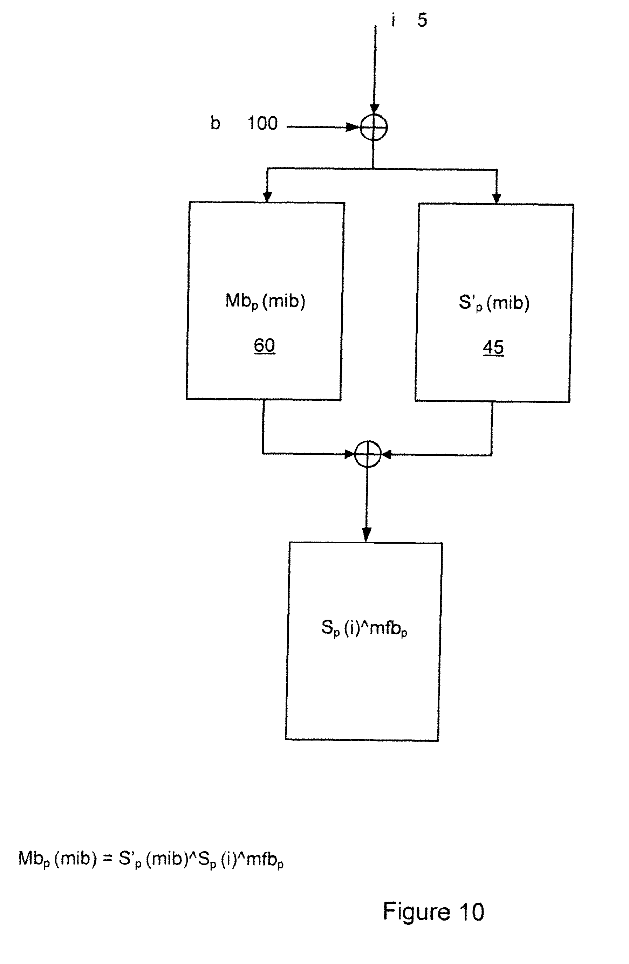

Figures 9 and 10 illustrate how the masking operation results in the correct output when the masked tables are generated in accordance with figures 4 and 5.

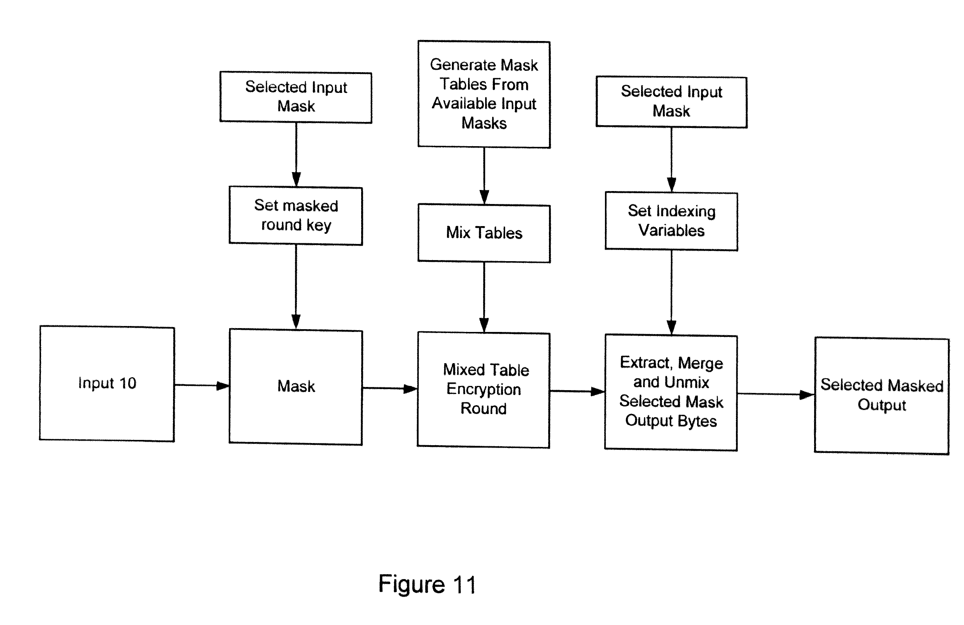

Figure 11 is a block diagram illustrating the sequence of steps in an encryption round and setting up the encryption round. As will be appreciated, the steps of generating mask tables and mixing tables, and selecting a selected input mask and setting indexing variables need not occur for each iteration of an encryption round. The generation and mixing steps may occur only once upon each innovation of the encryption algorithm, for instance, when first selecting the available input masks, or may re-occur after some number of iterations of the encryption round. In a preferred arrangement the steps of generating mask tables and mixing tables, and selecting a selected input mask and setting indexing variables occurs upon each invocation of the encryption method prior to carrying out multiple encryption rounds on one or more plaintext inputs.

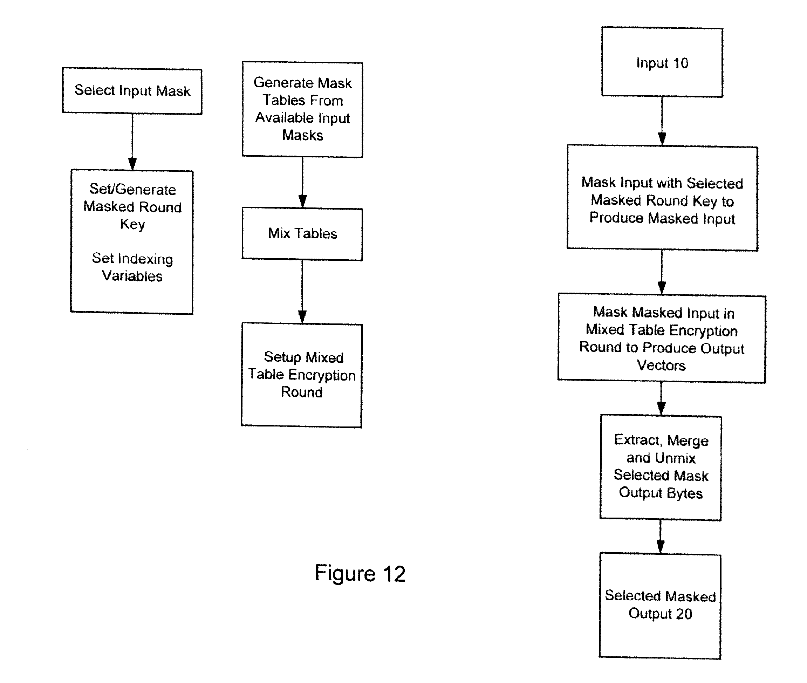

Figure 12 shows block diagrams illustrating the steps taken to setup an encryption round and the steps taken to carry out encryption in an encryption round. As described above, the selection of the selected input mask may occur once on invocation of the encryption algorithm, or may occur at additional or alternate occurrences. Once the setup steps have been taken, the encryption may be performed one or multiple times.

The frequency with which these steps occur may be selected to balance the overhead of the encryption process with the level of security required. While performing the generation and mixing steps only once will still result in an enhanced level of security, due to the selection of a selected input mask, further enhanced security may be achieved by re-generating and re-mixing the mask tables, for instance with a different set of input masks from the available input masks.

In general, the method has the characteristic that the set of selected masked tables and the set of corresponding masked tables used to generate the set of selected masked tables is always employed in the encryption computation, regardless of which of the available input masks are selected. For the general case with n input masks, n sets of masked tables and one set of masked substitution tables are used in the encryption round, though only the selected mask is extracted to provide the output.

For a particular embodiment where a second set of masked tables is generated from a second input mask and the first set of masked tables, one set of masked tables is required in the computation round, regardless of which of the two different input masks are selected. For a particular embodiment where a plurality of input masks are used, and the set of masked substitution tables is used to generate the plurality of sets of masked tables, the set of masked substitution tables is always required in a computation regardless of which input mask from the plurality of input masks is selected.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computing device implemented method of carrying out cryptographic steps to obtain a round output, the round output corresponding to a round input to a cryptographic round masked by a set of substitution tables and a selected set of mask tables corresponding to a selected input mask selected from a first input mask or a second input mask, the computing device comprising a processor in communication with a memory for executing the cryptographic steps, the method comprising:
the processor producing three masked intermediate outputs by:
masking the round input with entries from a set of masked substitution tables consisting of entries from the set of substitution tables each masked with the first input mask,
masking the round input with entries from a set of first mask tables generated from the first input mask and,
masking the round input with entries from a set of second mask tables generated from the second input mask, entries from the set of first
mask tables and entries from the set of masked substitution tables; the processor extracting from the masked intermediate outputs a masked output corresponding to the round input masked with the set of masked substitution tables and entries from the selected set of mask tables.

2. The method of claim 1 wherein the round input masking comprises masking the round input with three sets of mixed mask tables, the three sets of mixed mask tables generated by mixing entries from the set of masked substitution tables, entries from the set of first input mask tables, and entries from the set of second input mask tables; and, the round output is extracted by selecting entries from the three masked intermediate outputs corresponding to the round input masked by entries from the set of masked substitution tables and the round input masked by entries from the selected one of the set of first mask tables or the set of second mask tables.

3. The method of claim 1 or claim 2 further comprising the processor utilising the round output as the round input for a further cryptographic round and repeating the method of claim 1.

4. The method of claim 3, further comprising:
the processor re-selecting the selected input mask from either the first input mask or the second input mask; and,
the processor extracting the round output for subsequent cryptographic rounds by extracting entries corresponding to the round input masked with the set of masked substitution tables and a re-selected set of mask tables corresponding to the re-selected input mask.

5. The method of any preceding claim in which the selection is determined by a result of a random process or a pseudo-random process.

6. The method of any preceding claim wherein the first input mask and the second input mask are selected from a plurality of available input masks.

7. A computing device implemented method for carrying out cryptographic steps to obtain a round output, the round output corresponding to a round input to a cryptographic round masked by a set of substitution tables and a selected set of mask tables corresponding to a selected input mask selected from a plurality of input masks, the computing device comprising a processor in communication with a memory for executing the cryptographic steps, the method comprising:
the processor producing masked intermediate outputs by:
masking the round input with entries from a set of masked substitution tables consisting of entries from the set of substitution tables each masked with a first input mask from the plurality of input masks,
masking the round input with entries from a set of first mask tables generated from the first input mask and,
masking the round input with entries from sets of mask tables for each of the remaining input masks from the plurality of input masks;
the processor extracting from the masked intermediate outputs a masked output corresponding to the round input masked with the set of masked substitution tables and entries from the selected set of mask tables.

8. The method of claim 7 wherein the sets of mask tables for each of the remaining input masks are each generated from a different one of the remaining input masks from the plurality of input masks, entries from the set of first mask tables and entries from the set of masked substitution tables.

9. The method of claim 7 or claim 8 wherein entries from the set of masked substitution tables, the first set of mask tables and the sets of mask tables for each of the remaining input masks are mixed into sets of mixed mask tables, the number of sets of mixed mask tables equalling a combined number of sets of tables, which sets of tables comprise the first set of mask tables, the sets of mask tables for each of the remaining input masks and the set of masked substitution tables; and,
the round input is masked by masking the round input with the mixed mask tables to produce the masked intermediate outputs.

10. A computing device implemented method for carrying out cryptographic steps that use a plurality of input masks and a set of substitution tables in an encryption round, the computing device comprising a processor in communication with a memory for executing the cryptographic steps, comprising:
the processor selecting a selected input mask from the plurality of input masks;
the processor masking a round input using the set of substitution tables, the selected input mask and at least one additional input mask from the plurality of input masks to produce intermediate masked outputs;
the processor extracting the round output from the intermediate masked outputs,
the round output corresponding to the round input masked with the set of substitution tables and the selected input mask;
whereby the round input is masked with both the selected input mask and the at least one additional input mask from the plurality of input masks in the encryption round, but the round output is masked with only the substitution tables and the selected input mask.

11. A computing device implemented method for carrying out cryptographic steps that use a plurality of input masks and a set of substitution tables in an encryption round, the computing device comprising a processor in communication with a memory for executing the cryptographic steps, comprising:
the processor initialising the encryption round by:
selecting a selected input mask from the plurality of input masks;
generating a set of masked substitution tables by masking the set of substitution tables with a first input mask from the plurality of input masks;
generating a set of first mask tables from the first input mask; and,
generating a set of mask tables for each of the remaining input masks from the plurality of input masks, using one of the remaining input masks, the set of masked substitution tables and the set of first mask tables;
the processor masking a round input to produce intermediate masked outputs by:
masking the round input with the set of masked substitution tables;
masking the round input with the set of first mask tables; and,
masking the round input with the remaining mask tables;
the processor extracting a round output from the intermediate masked outputs, the round output corresponding to the round input masked with the set of substitution tables and the selected input mask.

12. The method of claim 11 wherein the initialising further comprises mixing entries of the generated tables to create a plurality plus one sets of mixed mask tables; and, the masking comprises masking the round input with the plurality plus one sets of mixed mask tables.

13. A computer readable medium comprising computer readable instructions which when executed on a processor of a computing device cause the device to carry out the steps of the method of any one of claims 1 to 12.

14. The computer readable medium of claim 13 in which the program code is operative to carry out rounds in an Advanced Encryption Standard process or in a Data Encryption Standard process.

15. A computing device comprising a processor in communication with a memory, the device being configured to carry out steps of the method of any one of Claims 1 to 12.

## Amended claims

### Amended claims in accordance with Rule 137(2) EPC.

**1.** A computing device (200) implemented method for carrying out cryptographic steps to obtain a round output (20), the round output (20) corresponding to a round input (10) to a cryptographic round masked by a set of substitution tables and a selected set of mask tables corresponding to a selected input mask selected from a plurality of input masks, the computing device (200) comprising a processor (202) in communication with a memory (204, 206) for executing the cryptographic steps, the method comprising:
the processor (202) producing masked intermediate outputs by:
masking the round input (10) with entries from a set of masked substitution tables consisting of entries from the set of substitution tables each masked with a first input mask from the plurality of input masks,
masking the round input with entries from a set of first mask tables generated from the first input mask and,
masking the round input with entries from sets of mask tables for each of the remaining input masks from the plurality of input masks;
the processor (202) extracting from the masked intermediate outputs a round output (20) corresponding to the round input (10) masked with the set of substitution tables and the selected input mask.

**2.** The method of claim 1 wherein the sets of mask tables for each of the remaining input masks are each generated from a different one of the remaining input masks from the plurality of input masks, entries from the set of first mask tables and entries from the set of masked substitution tables.

**3.** The method of claim 1 or claim 2 wherein entries from the set of masked substitution tables, the first set of mask tables and the sets of mask tables for each of the remaining input masks are mixed into sets of mixed mask tables, the number of sets of mixed mask tables equalling a combined number of sets of tables, which sets of tables comprise the first set of mask tables, the sets of mask tables for each of the remaining input masks and the set of masked substitution tables; and,
the round input (10) is masked by masking the round input (10) with the mixed mask tables to produce the masked intermediate outputs.

**4.** The method of claim 1 wherein the selected mask is selected from a first input mask or a second input mask.

**5.** The method of claim 4 wherein the round input masking comprises masking the round input (10) with three sets of mixed mask tables, the three sets of mixed mask tables generated by mixing entries from the set of masked substitution tables, entries from the set of first input mask tables, and entries from the set of second input mask tables; and, the round output (20) is extracted by selecting entries from the three masked intermediate outputs corresponding to the round input (10) masked by entries from the set of masked substitution tables and the round input (10) masked by entries from the selected one of the set of first mask tables or the set of second mask tables.

**6.** The method of claim 4 or claim 5 further comprising the processor (202) utilising the round output (20) as the round input (10) for a further cryptographic round and repeating the method of claim 4.

**7.** The method of claim 6, further comprising:
the processor (202) re-selecting the selected input mask from either the first input mask or the second input mask; and,
the processor (202) extracting the round output (20) for subsequent cryptographic rounds by extracting entries corresponding to the round input (10) masked with the set of masked substitution tables and a re-selected set of mask tables corresponding to the re-selected input mask.

**8.** The method of any preceding claim in which the selection is determined by a result of a random process or a pseudo-random process.

**9.** The method of any preceding claim wherein the first input mask and the second input mask are selected from a plurality of available input masks.

**10.** The method of claim 1 wherein before the device (200) carries out the cryptographic steps, the device (200) initialises the encryption round by:
generating the set of masked substitution tables by masking the set of substitution tables with the first input mask;
generating the set of first mask tables from the first input mask; and,
generating the sets of mask tables for each of the remaining input masks from the plurality of input masks.

**11.** The method of claim 10 wherein the initialising further comprises mixing entries of the generated tables to create a plurality plus one sets of mixed mask tables; and, the masking comprises masking the round input (10) with the plurality plus one sets of mixed mask tables.

**12.** A computer readable medium comprising computer readable instructions which when executed on a processor (202) of a computing device (200) cause the device (200) to carry out the steps of the method of any one of claims 1 to 11.

**13.** The computer readable medium of claim 12 in which the program code is operative to carry out rounds in an Advanced Encryption Standard process or in a Data Encryption Standard process.

**14.** A computing device (200) comprising a processor (202) in communication with a memory (204, 206), the device (200) being configured to carry out steps of the method of any one of Claims 1 to 11.
